# EUROPÄISCHE PATENTANMELDUNG

(11) **EP 1 431 721 A2**
(43) Veröffentlichungstag der Anmeldung: **23.06.2004**
(21) Anmeldenummer: 03011336.9
(22) Anmeldetag: 19.05.2003
(51) Int. Cl.: G01F 1/84, G01F 15/02

(54) **Massendurchflussmessgerät und Verfahren zur Korrektur des Messsignals eines Massendurchflussmessgeräts**

(30) Priorität: 16.12.2002 DE 10258962
(71) Anmelder: Krohne AG, 4019 Basel (CH)
(72) Erfinder: Hussain, Yousif, Dr., Weston Favell, Northampton NN3 3DA (GB); Jukes, Edward, Wellingborough, Northamptonshire NN8 1RX (GB)
(74) Vertreter: Gesthuysen, von Rohr & Eggert

(57) **Zusammenfassung**

Dargestellt und beschrieben sind ein Massendurchflußmeßgerät und ein Verfahren zur Korrektur des Meßsignals eines Massendurchflußmeßgeräts. Das Massendurchflußmeßgerät für strömende Medien, das nach dem Coriolis-Prinzip arbeitet, weist wenigstens ein das strömende Medium führendes, gerades Meßrohr (1), ein das Meßrohr (1), den Schwingungserzeuger (2) und den Meßwertsensor (3) aufnehmendes Tragrohr (4), einen Spannungssensor (5) zur Erfassung des Spannungszustands des Meßrohrs (1) und eine Korrektureinrichtung (6) zur Korrektur des Meßsignals auf, wobei der Meßwertsensor (3) und der den Spannungszustand des Meßrohrs (1) erfassende Spannungssensor (5) mit der Korrektureinrichtung (6) verbunden sind, um der Korrektureinrichtung (6) das Meßsignal und das von dem den Spannungszustand des Meßrohrs (1) erfassenden Spannungssensor (5) ausgegebene Spannungssignal zuzuleiten. Im Ergebnis wird damit verbesserte Fehlerkorrektur des mit dem Massendurchflußmeßgerät ermittelten Massendurchflußwertes erreicht.

## Beschreibung

Die Erfindung betrifft ein Massendurchflußmeßgerät für strömende Medien, das nach dem Coriolis-Prinzip arbeitet, mit wenigstens einem das strömende Medium führenden, geraden Meßrohr, mit wenigstens einem auf das Meßrohr einwirkenden Schwingungserzeuger, mit wenigstens einem Coriolis-Kräfte und/oder auf Coriolis-Kräften beruhende Coriolis-Schwingungen erfassenden und ein Meßsignal ausgebenden Meßwertsensor, mit einem das Meßrohr, den Schwingungserzeuger und den Meßwertsensor aufnehmenden Tragrohr, mit einem Spannungssensor zur Erfassung des Spannungszustandes des Meßrohrs und mit einer Korrektureinrichtung zur Korrektur des Meßsignals, wobei das Meßrohr und das Tragrohr in einer axiale Relativbewegungen ausschließenden Weise miteinander verbunden sind und der axiale Abstand der Befestigungsstellen des Tragrohrs am Meßrohr voneinander die Schwingungslänge des Meßrohrs darstellt und wobei der Meßwertsensor und der den Spannungszustand des Meßrohrs erfassende Spannungssensor mit der Korrektureinrichtung verbunden sind, um der Korrektureinrichtung das Meßsignal und das von dem den Spannungszustand des Meßrohrs erfassenden Spannungssensor ausgegebene Spannungssignal zuzuleiten.

Die Erfindung betrifft ferner ein Verfahren zur Korrektur des Meßsignals eines Massendurchflußmeßgeräts für strömende Medien, das nach dem Coriolis-Prinzip arbeitet und wenigstens ein das strömende Medium führendes, gerades Meßrohr, wenigstens einen auf das Meßrohr einwirkenden Schwingungserzeuger, wenigstens einen Coriolis-Kräfte und/oder auf Coriolis-Kräften beruhende Coriolis-Schwingungen erfassenden und ein Meßsignal ausgebenden Meßwertsensor und ein das Meßrohr, den Schwingungserzeuger und den Meßwertsensor aufnehmendes Tragrohr aufweist, wobei das Meßrohr und das Tragrohr in einer axiale Relativbewegungen ausschließenden Weise miteinander verbunden sind und der axiale Abstand der Befestigungsstellen des Tragrohrs am Meßrohr voneinander die Schwingungslänge des Meßrohrs darstellt und wobei der Spannungszustand des Meßrohrs erfaßt wird.

Bei Massendurchflußmeßgeräten für strömenden Medien, die nach dem Coriolis-Prinzip arbeiten, sogenannten Coriolis-Massendurchflußmeßgeräten, unterscheidet man grundsätzlich zwischen einerseits solchen Geräten, deren Meßrohr gebogen, z. B. schleifenförmig, ausgeführt ist, und andererseits solchen Geräten, deren Meßrohr im wesentlichen gerade ist. Außerdem unterscheidet man bei den in Rede stehenden Coriolis-Massendurchflußmeßgeräten zwischen einerseits solchen, die nur ein Meßrohr aufweisen, und andererseits solchen, die zwei Meßrohre aufweisen. Bei den Ausführungsformen der Coriolis-Massendurchflußmeßgeräte mit zwei Meßrohren können diese strömungstechnisch gesehen in Reihe oder parallel zueinander liegen.

Ausführungsformen von Coriolis-Massendurchflußmeßgeräten, bei denen das Meßrohr gerade ausgeführt ist bzw. bei denen die Meßrohre gerade ausgeführt sind, sind in Bezug auf den mechanischen Aufbau einfach und folglich mit relativ geringen Kosten herstellbar. Die auf diese Weise erzielbaren Coriolis-Massendurchflußmeßgeräte sind kompakt und führen zu nur geringem Druckverlust.

Nachteilig ist bei solchen Coriolis-Massendurchflußmeßgeräten, bei denen das Meßrohr gerade ausgeführt ist bzw. bei denen die Meßrohre gerade ausgeführt sind, daß sowohl thermisch bedingte Längenänderungen bzw. thermisch bedingte Spannungen als auch von außen einwirkende Kräfte und Momente zu Meßfehlern und zu mechanischen Schäden, nämlich zu Spannungsrissen, führen können.

Ein Massendurchflußmeßgerät und ein Verfahren zur Korrektur des Meßsignals eines Massendurchflußmeßgeräts, wie eingangs beschrieben, sind z. B. aus der DE 42 24 397 C1 bekannt. Bei dem dort beschriebenen Coriolis-Massendurchflußmeßgerät ist als Spannungssensor zur Erfassung des Spannungszustands des Meßrohrs ein Änderungen der Schwingungslänge des Meßrohrs erfassender Längenänderungssensor zur schwingungslängen- und spannungsabhängigen Korrektur des Meßsignals vorgesehen.

Dadurch, daß bei diesem aus dem Stand der Technik bekannten Coriolis-Massendurchflußmeßgerät ein Änderungen der Schwingungslänge des Meßrohrs erfassender Längenänderungssensor vorgesehen ist, kann eine die Schwingungsfrequenz des Meßrohrs beeinflussende Änderung der Schwingungslänge und des axialen Spannungszustands des Meßrohrs berücksichtigt werden, wodurch Meßfehler verringert oder eliminiert werden können. Bei zusätzlichem Vorsehen eines Temperatursensors können einerseits solche Meßfehler verringert oder eliminiert werden, die auf Temperaturänderungen des Meßrohrs beruhen, und andererseits solche, die auf Kräften beruhen, die von außen auf das Meßrohr einwirken. Dabei sind die vom Längenänderungssensor herrührenden Längenänderungssignale ein unmittelbares Maß für Änderungen der Schwingungslänge der Meßleitung, unabhängig von deren Herkunft, und ein indirektes Maß für Veränderungen des axialen Spannungszustands des Meßrohrs, ebenfalls unabhängig von deren Herkunft. Der Längenänderungssensor zur Erfassung der Änderungen der Schwingungslänge des Meßrohrs ermöglicht es also, Änderungen der Schwingungslänge des Meßrohrs und Änderungen des axialen Spannungszustands des Meßrohrs zu erfassen und darauf beruhende Fehler im Meßsignal bei der Bestimmung des Massendurchflußwertes zu verringern oder zu eliminieren.

Was die durch Temperaturänderungen auftretenden Meßfehler betrifft, gilt im übrigen folgendes: Die Temperaturabhängigkeit des Elastizitätsmoduls beeinflußt die Schwingungsfrequenz und die Nachgiebigkeit des Meßrohrs und damit das von dem Meßwertsensor ausgegebene Meßsignal. Diese Erkenntnis hat zur Folge gehabt, daß ein die Temperatur des Meßrohrs erfassender Temperatursensor zur meßrohrtemperaturabhängigen Korrektur des Meßsignals vorgesehen wird. Dazu wird auch verwiesen auf den Aufsatz "Direkte Massendurchflußmessung, insbesondere mit Coriolis-Verfahren" von W. Steffen und Dr. W. Stumm in "messen prüfen und automatisieren", 1987, S. 301 - 305.

Weiterhin ist aus dem Stand der Technik ein Coriolis-Massendurchflußmeßgerät bekannt, bei dem die weitergehende Temperaturabhängigkeit des Meßsignals dadurch berücksichtigt wird, daß ein die Temperatur des Tragrohrs erfassender Temperatursensor zur tragrohrtemperaturabhängigen Korrektur des Meßsignals vorgesehen wird. Dies ist in der DE 36 32 800 A1 sowie in der EP 0 261 435 B1 beschrieben. Die dort dargestellten Korrekturmaßnahmen sehen vor, daß die von den beiden Temperatursensoren erzeugten Temperatursensorsignale in eine Korrektureinrichtung gegeben werden, die den Temperatureinfluß auf das Meßsignal beseitigen soll.

Alle zuvor beschriebenen Einrichtungen und Maßnahmen, die bei Coriolis-Massendurchflußmeßgeräten getroffen worden sind, um eine spannungs- bzw. temperaturabhängige Korrektur des Meßsignals zu erreichen, haben zu einer Verbesserung bei der Ermittlung des Massendurchflußsignals geführt. Die bekannten Maßnahmen sind jedoch nicht vollständig zufriedenstellend, zeigt sich doch, daß die ermittelten Massendurchflußsignale weiterhin, wenn auch geringer, fehlerbehaftet sind.

Ausgehend davon ist es die Aufgabe der Erfindung, ein solches Coriolis-Massendurchflußmeßgerät bzw. ein solches Verfahren zur Korrektur des Meßsignals eines Coriolis-Massendurchflußmeßgeräts bereitzustellen, mit denen eine weitergehende Korrektur des Meßsignals und damit des ermittelten Werts für den Massendurchfluß erzielbar ist.

Ausgehend von dem eingangs beschriebenen Coriolis-Massendurchflußmeßgerät ist die zuvor hergeleitete und aufgezeigte Aufgabe dadurch gelöst, daß ein den Spannungszustand des Tragrohrs erfassender Spannungssensor vorgesehen ist, der den Spannungszustand des Tragrohrs erfassende Spannungssensor mit der Korrektureinrichtung verbunden ist, um der Korrektureinrichtung das von dem den Spannungszustand des Tragrohrs erfassenden Spannungssensor ausgegebene Spannungssignal zuzuleiten, so daß von der Korrektureinrichtung ein auf der Grundlage des von dem den Spannungszustand des Meßrohrs erfassenden Spannungssensor ausgegebenen Spannungssignals und des von dem den Spannungszustand des Tragrohrs erfassenden Spannungssensor ausgegebenen Spannungssignals korrigiertes Meßsignal ausgebbar ist.

Erfindungsgemäß ist also zusätzlich zu dem Spannungssensor zur Messung des Spannungszustands des Meßrohrs ein weiterer Spannungssensor vorgesehen, nämlich ein solcher, der den Spannungszustand des Tragrohrs erfaßt. Damit können einerseits die Schwingungslänge und der axiale Spannungszustand des Meßrohrs und andererseits die Länge und der axiale Spannungszustand des Tragrohrs ermittelt werden, wobei Längenänderungen und Spannungszustand des Meßrohrs bzw. des Tragrohrs von unterschiedlichen Einflußfaktoren unterschiedlich stark beeinflußt werden.

Werden nun die von dem Meßrohr bzw. Tragrohr stammenden Informationen bezüglich des Spannungszustands gemeinsam zur längen- und spannungsabhängigen Korrektur des Meßsignals verwendet, läßt sich gegenüber den bisher bekannten Maßnahmen eine noch effektivere Korrektur des Meßsignals erzielen. Dabei gilt insbesondere, daß der Spannungssensor auf dem Tragrohr nur wenig von der Temperatur des durch das Meßrohr strömenden Mediums beeinflußt wird. Der Spannungssensor auf dem Tragrohr wird jedoch wesentlich stärker durch die von außen auf das Coriolis-Massendurchflußmeßgerät einwirkende Spannungen, wie Zug, Druck oder Torsionen, und die Umgebungstemperatur beeinflußt. Die Umgebungstemperatur ihrerseits kann den Spannungssensor auf dem Meßrohr nur wenig beeinflussen, da die Temperatur des Meßrohrs im wesentlichen durch die Temperatur des durch das Meßrohr strömenden Mediums bestimmt wird. Im Ergebnis werden durch den am Tragrohr vorgesehenen Spannungssensor im wesentlichen Informationen bezüglich äußerer Einflüsse bereitgestellt, so daß in Kombination mit den Informationen durch den Spannungssensor für den Spannungszustand des Meßrohrs insgesamt eine verbesserte längen- und spannungsabhängige Korrektur des Meßsignals ermöglicht wird.

Zur Ermittlung des korrigierten Meßsignals auf der Grundlage des von dem Spannungszustand des Meßrohrs erfassenden Spannungssensor ausgegebenen Spannungssignals und des von dem den Spannungszustand des Tragrohrs erfassenden Spannungssensor ausgegebenen Spannungssignals gibt es verschiedene Möglichkeiten. So können z. B. im Rahmen eines theoretischen Modells die Zusammenhänge und Abhängigkeiten der das Meßsignal beeinflussenden Faktoren von den Spannungszuständen des Tragrohrs bzw. des Meßrohrs ermittelt werden, um eine Korrekturfunktion zu erhalten. In der Regel werden sich jedoch mathematische Korrekturvorschriften für das Meßsignal nicht in geschlossener Form angeben lassen, so daß zu Iterations- oder Näherungsverfahren gegriffen werden muß.

Gemäß einer bevorzugten Weiterbildung der Erfindung ist vorgesehen, daß zur Ermittlung des korrigierten Meßsignals in der Korrektureinrichtung eine empirisch ermittelten Korrekturfunktion bereitgestellt wird. Zur Ermittlung einer solchen Korrekturfunktion wird das Meßrohr z. B. von einem Medium mit jeweils bekanntem Massendurchfluß durchflossen, und bei diesem bekannten Massendurchfluß werden die Spannungszustände des Meßrohrs bzw. des Tragrohrs ermittelt. Damit ergibt sich eine Reihe von Werte-Trippeln, aus denen mittels Anpaßverfahren, sogenannten Fit-Verfahren, eine empirische Korrekturfunktion ermittelt wird.

Als Spannungssensoren für den Spannungszustand des Meßrohrs bzw. des Tragrohrs können verschiedene Spannungssensoren eingesetzt werden. Insbesondere ist es nicht erforderlich, daß die Spannungssensoren direkt auf dem Meßrohr bzw. auf dem Tragrohr befestigt sind. Es sind nämlich auch Spannungssensoren zur berührungslosen Spannungsmessung bekannt. Gemäß einer bevorzugten Weiterbildung der Erfindung ist jedoch vorgesehen, daß als Spannungssensoren Längenänderungssensoren, insbesondere nämlich Dehnungsmeßstreifen, vorgesehen sind, mit denen Spannungs- und Längenänderungen des Meßrohrs bzw. des Tragrohrs erfaßbar sind. Solche auf dem Meßrohr bzw. dem Tragrohr anbringbare Dehnungsmeßstreifen sind aus dem Stand der Technik als Meßfiihler für mechanische Größen, wie kleine Dehnungen, Stauchungen, Biegungen und Torsionen sowie den zugehörigen elastischen Spannungen, gut bekannt. Das wirksame Meßelement eines solchen Dehnungsstreifens besteht z. B. aus einem dünnen Widerstandsdraht, der schleifen- oder zickzackförmig auf einem dehnbaren Streifen aus einem Trägermaterial, wie Kunststoff, aufgebracht ist. Wird der Dehnungsmeßstreifen auf einen verformbaren Körper, wie das Meßrohr bzw. das Tragrohr des Coriolis-Massendurchflußmeßgeräts, aufgebracht, so erfährt der Dehnungsmeßstreifen bei einer Belastung die gleichen Dehnungen oder Stauchungen, wie das Meßrohr bzw. das Tragrohr selbst, was zu einer Längung und Querkontraktion des Widerstandsdrahtes im Falle einer Dehnung bzw. zu einer Verkürzung und Querstauchung des Widerstandsdrahts im Falle einer Stauchung und damit immer zu einer Änderung des elektrischen Widerstands des Widerstandsdrahtes führt. Diese Änderung des elektrischen Widerstands ist zur Dehnung bzw. zur Stauchung und damit nach dem Hookschen-Gesetz zur elastischen Spannung proportional.

Grundsätzlich kommen unterschiedliche Orientierungen der Spannungssensoren auf dem Tragrohr bzw. dem Meßrohr in Betracht. Gemäß einer bevorzugten Weiterbildung der Erfindung ist jedoch vorgesehen, daß der den Spannungszustand des Meßrohrs erfassende Spannungssensor in Längsrichtung des Meßrohrs orientiert ist und/oder der den Spannungszustand des Tragrohrs erfassende Spannungssensor in Längsrichtung des Tragrohrs orientiert ist. Auf die Weise ist nämlich sichergestellt, daß die von den Spannungssensoren erfaßten Längenänderungen Änderungen der tatsächlichen Schwingungslänge des Meßrohrs bzw. der tatsächlichen Länge des Tragrohrs sind.

Ausgehend von dem eingangs beschriebenen Verfahren zur Korrektur des Meßsignals eines Coriolis-Massendurchflußmeßgeräts ist die weiter oben hergeleitete und aufgezeigte Aufgabe dadurch gelöst, daß der Spannungszustand des Tragrohrs erfaßt wird und das Meßsignal auf der Grundlage des erfaßten Spannungszustands des Meßrohrs und des erfaßten Spannungszustandes des Tragrohrs korrigiert wird.

Bevorzugte Weiterbildungen des erfindungsgemäßen Verfahrens ergeben sich im übrigen in Analogie zu den bevorzugten Weiterbildungen des erfindungsgemäßen Coriolis-Massendurchflußmeßgeräts.

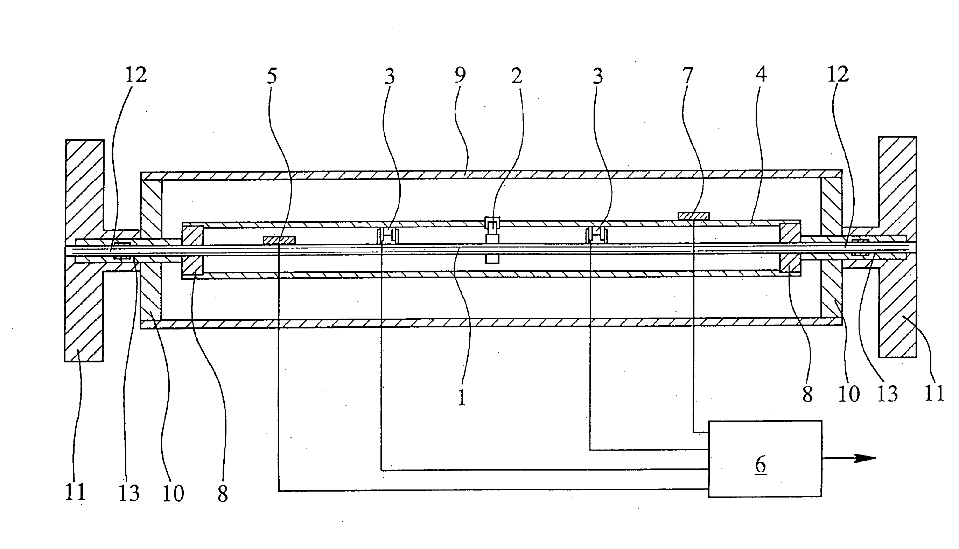

Im einzelnen gibt es nun eine Vielzahl von Möglichkeiten, das erfmdungsgemäße Massendurchflußmeßgerät sowie das erfindungsgemäße Verfahren zur Korrektur des Meßsignals eines Coriolis-Massendurchflußmeßgeräts auszugestalten und weiterzubilden. Dazu wird auf die den unabhängigen Patentansprüchen nachgeordneten Patentansprüche sowie auf die nachfolgende detaillierte Beschreibung eines bevorzugten Ausführungsbeispiels unter Bezugnahme auf die Zeichnung verwiesen. In der Zeichnung zeigt die einzige Figur ein Coriolis-Massendurchflußmeßgerät gemäß einem bevorzugten Ausführungsbeispiel der Erfindung im Schnitt.

Das aus der Figur im Schnitt ersichtliche Coriolis-Massendurchflußmeßgerät weist ein einziges gerades Meßrohr 1, einen auf das Meßrohr 1 einwirkenden Schwingungserzeuger 2 und zwei Coriolis-Kräfte und/oder auf Coriolis-Kräften beruhende Coriolis-Schwingungen erfassende Meßwertsensoren 3 auf. Außerdem ist ein das Meßrohr 1, den Schwingungserzeuger 2 und die Meßwertsensoren 3 aufnehmendes Tragrohr 4 vorgesehen. Zur Erfassung des Spannungszustands des Meßrohrs 1 ist auf diesem ein Spannungssensor 5 angeordnet, nämlich in Form eines Dehnungsmeßstreifens. Dieser ist mit einer Korrektureinrichtung 6 zur Korrektur des Meßsignals verbunden, um dieser das von dem den Spannungszustand des Meßrohrs 1 erfassenden Spannungssensor 5 ausgegebene Spannungssignal zuzuleiten. Die Korrektureinrichtung 6 ist weiterhin mit den Meßwertsensoren 3 verbunden, um der Korrektureinrichtung 6 außerdem die von den Meßwertsensoren 3 kommenden Meßsignale zuzuleiten. Bekanntermaßen ergibt sich ein dem Massendurchfluß durch das Meßrohr 1 proportionales Signal direkt durch die Phasenverschiebung der von den beiden Meßwertsensoren 3 aufgenommenen Schwingungssignale.

Außer dem Spannungssensor 5 zur Erfassung des Spannungszustands des Meßrohrs 1 ist weiterhin ein Spannungssensor 7 zur Erfassung des Spannungszustands des Tragrohrs 4 vorgesehen, und zwar ebenfalls in Form eines Dehnungsmeßstreifens. Das von dem Spannungssensor 7 auf dem Tragrohr 4 erfaßte Spannungssignal wird ebenfalls der Korrektureinrichtung 6 zugeleitet. Von der Korrektureinrichtung 6 wird dann ein auf der Grundlage des von dem den Spannungszustand des Meßrohrs 1 erfassenden Spannungssensors 5 ausgegebenen Spannungssignals und des von dem den Spannungszustand des Tragrohrs 4 erfassenden Meßwertsensor 7 ausgegebenen Spannungssignals korrigiertes Meßsignal ausgegeben, konkret nämlich ein korrigiertes Signal für den Massendurchfluß durch das Meßrohr 1.

Das Meßrohr 1 und das Tragrohr 4 sind in einer axiale Relativbewegungen ausschließenden Weise miteinander verbunden, wobei der axiale Abstand der Befestigungsstellen des Tragrohrs 4 am Meßrohr 1 voneinander die Schwingungslänge des Meßrohrs 1 darstellt. Zur Befestigung des Tragrohrs 4 an dem Meßrohr 1 sind zwei endseitig an das Tragrohr angeschlossene Verbindungsringe 8 vorgesehen. Schließlich ist als Gehäuse des Coriolis-Massendurchflußmeßgeräts ein äußerer Aufnahmezylinder 9 vorgesehen, der die Baueinheit aus dem Meßrohr 1, dem Schwingungserzeuger 2, den Meßwertsensoren 3, dem Tragrohr 6 und den Verbindungsringen 8 aufnimmt. Dabei weist der Aufnahmezylinder 9 zwei endseitig angeschlossene Verbindungsringe 10 auf, an die jeweils ein nach außen ragender Anschlußflansch 11 angeschlossen ist. Durch die Verbindungsringe 10 hindurch ragen mit dem Meßrohr 1 verbundene Anschlußrohre 12 an die Anschlußflansche 11 heran. Gemäß dem vorliegenden bevorzugten Ausführungsbeispiel der Erfindung sind das Meßrohr 1 und die Anschlußrohre 12 einstückig ausgebildet, es handelt insgesamt also um ein durchgehendes Rohr. Zum Schutz der Anschlußrohre 12 sind diese jeweils mit einem Verstärkungszylinder 13 ummantelt.

Bei dem Coriolis-Massendurchflußmeßgerät gemäß dem vorliegend beschriebenen bevorzugten Ausführungsbeispiel der Erfindung sind insgesamt also zwei Dehnungsmeßstreifen vorgesehen, nämlich einer zur Erfassung des Spannungszustands des Meßrohrs 1 und ein weiterer zur Erfassung des Spannungszustands des Tragrohrs 4. Damit können, wie weiter oben schon detailliert dargelegt, einerseits die Schwingungslänge und der axiale Spannungszustand des Meßrohrs 1 und andererseits die Länge und der axiale Spannungszustand des Tragrohrs 4 ermittelt werden, wobei Längenänderungen und Spannungszustand des Meßrohrs 1 bzw. des Tragrohrs 4 von unterschiedlichen Einflußfaktoren unterschiedlich stark beeinflußt werden.

Dabei gilt insbesondere, daß der Spannungssensor 7 auf dem Tragrohr 4 nur wenig von der Temperatur des durch das Meßrohr 1 strömenden Mediums beeinflußt wird, wesentlich stärker jedoch durch die von außen auf das Coriolis-Massendurchflußmeßgerät einwirkenden Spannungen, wie Zug, Druck oder Torsionen, und die Umgebungstemperatur. Die Umgebungstemperatur kann den Spannungssensor 5 am Meßrohr 1 wiederum nur wenig beeinflussen, da die Temperatur des Meßrohrs 1 im wesentlichen bestimmt wird durch die Temperatur des durch das Meßrohr 1 strömenden Mediums.

Bei dem vorliegend beschriebenen Coriolis-Massendurchflußmeßgerät gemäß dem bevorzugten Ausführungsbeispiel der Erfindung können also die von dem Meßrohr 1 bzw. Tragrohr 4 stammenden Informationen bezüglich des jeweiligen Spannungszustands gemeinsam zur Korrektur des Meßsignals verwendet werden, nämlich hinsichtlich längen- und spannungsabhängigen Beeinflussungen des Meßsignals durch die Anwendung einer empirisch ermittelten Korrekturfunktion in der Korrektureinrichtung 6. Im Ergebnis läßt sich damit eine effektive Fehlerkorrektur des Meßsignals erzielen.

## Patentansprüche

1. Massendurchflußmeßgerät für strömende Medien, das nach dem Coriolis-Prinzip arbeitet, mit wenigstens einem das strömende Medium führenden, geraden Meßrohr (1), mit wenigstens einem auf das Meßrohr einwirkende Schwingungserzeuger (2), mit wenigstens einem Coriolis-Kräfte und/oder auf Coriolis-Kräften beruhende Coriolis-Schwingungen erfassenden und ein Meßsignal ausgebende Meßwertsensor (3), mit einem das Meßrohr (1), den Schwingungserzeuger (2) und den Meßwertsensor (3) aufnehmenden Tragrohr (4), mit wenigstens einem Spannungssensor (5) zur Erfassung des Spannungszustands des Meßrohr (1) und mit einer Korrektureinrichtung (6) zur Korrektur des Meßsignals, wobei das Meßrohr (1) und das Tragrohr (4) in einer axiale Relativbewegungen ausschließenden Weise miteinander verbunden sind und der axiale Abstand der Befestigungsstellen des Tragrohrs (4) am Meßrohr (1) voneinander die Schwingungslänge des Meßrohrs (1) darstellt und wobei der Meßwertsensor (3) und der den Spannungszustand des Meßrohrs (1) erfassende Spannungssensor (5) mit der Korrektureinrichtung (6) verbunden sind, um der Korrektureinrichtung (6) das Meßsignal und das von dem den Spannungszustand des Meßrohrs (1) erfassenden Spannungssensor (5) ausgegebene Spannungssignal zuzuleiten, **dadurch gekennzeichnet, daß** wenigstens ein den Spannungszustand des Tragrohrs (4) erfassender Spannungssensor (7) vorgesehen ist, der den Spannungszustand des Tragrohrs (4) erfassende Spannungssensor (7) mit der Korrektureinrichtung (6) verbunden ist, um der Korrektureinrichtung (6) daß von dem den Spannungszustand des Tragrohrs (4) erfassenden Spannungssensor (7) ausgegebene Spannungssignal zuzuleiten, so daß von der Korrektureinrichtung (6) ein auf der Grundlage des von dem den Spannungszustand des Meßrohrs (1) erfassenden Spannungssensor (5) ausgegebenen Spannungssignals und das von dem den Spannungszustand des Tragrohrs (4) erfassenden Spannungssensor (7) ausgegebenen Spannungssignals korrigiertes Meßsignal ausgebbar ist.

2. Massendurchflußmeßgerät nach Anspruch 1, **dadurch gekennzeichnet, daß** zur Ermittlung des korrigierten Meßsignals in der Korrektureinrichtung (6) eine empirisch ermittelte Korrekturfunktion bereitgestellt wird.

3. Massendurchflußmeßgerät nach Anspruch 1 oder 2, **dadurch gekennzeichnet, daß** als Spannungssensoren (5, 7) Längenänderungssensoren, insbesondere Dehnungsmeßstreifen, vorgesehen sind, mit denen Spannungs- und Längenänderungen des Meßrohrs (1) bzw. des Tragrohrs (4) erfaßbar sind.

4. Massendurchflußmeßgerät nach einem der Ansprüche 1 bis 3, **dadurch gekennzeichnet, daß** der den Spannungszustand des Meßrohrs (1) erfassenden Spannungssensor (5) in Längsrichtung des Meßrohrs (1) orientiert ist und/oder der den Spannungszustand des Tragrohrs (4) erfassende Spannungssensor (7) in Längsrichtung des Tragrohrs (4) orientiert ist.

5. Verfahren zur Korrektur des Meßsignals eines Massendurchflußmeßgeräts für strömende Medien, das nach dem Coriolis-Prinzip arbeitet und wenigstens ein das strömende Medium fiihrendes, gerades Meßrohr (1), wenigstens einen auf das Meßrohr (1) einwirkenden Schwingungserzeuger (2), wenigstens einen Coriolis-Kräfte und/oder auf Coriolis-Kräften beruhende Coriolis-Schwingungen erfassenden und ein Meßsignal ausgebenden Meßwertsensor (3) und ein das Meßrohr (1), den Schwingungserzeuger (2) und den Meßwertsensor (3) aufnehmendes Tragrohr (4) aufweist, wobei das Meßrohr (1) und das Tragrohr (4) in einer axiale Relativbewegungen ausschließenden Weise miteinander verbunden sind und der axiale Abstand der Befestigungsstellen des Tragrohrs (4) am Meßrohr (1) voneinander die Schwingungslänge des Meßrohrs (1) darstellt und wobei der Spannungszustand des Meßrohrs (1) erfaßt wird, **dadurch gekennzeichnet, daß** der Spannungszustand des Tragrohrs (4) erfaßt wird und das Meßsignal auf der Grundlage des erfaßten Spannungszustandes des Meßrohrs (1) und des erfaßten Spannungszustandes des Tragrohrs (4) korrigiert wird.

6. Verfahren nach Anspruch 5, **dadurch gekennzeichnet, daß** das Meßsignal auf der Grundlage einer empirisch ermittelten Korrekturfunktion korrigiert wird.

7. Verfahren nach Anspruch 5 oder 6, **dadurch gekennzeichnet, daß** die Längenänderungen des Meßrohrs bzw. des Tragrohrs erfaßt werden.
